(19) Europäisches Patentamt
European Patent Office
Office européen des brevets

(11) **EP 3 073 443 B1**

(12) **EUROPEAN PATENT SPECIFICATION**

(45) Date of publication and mention
of the grant of the patent:
**02.05.2018 Bulletin 2018/18**

(51) Int Cl.:
**G06T 7/11** *(2017.01)*

(21) Application number: **15160395.8**

(22) Date of filing: **23.03.2015**

(54) **3D SALIENCY MAP**

3D-SALIENZKARTE

CARTE DE SAILLANCE 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.09.2016 Bulletin 2016/39**

(73) Proprietor: **Université de Mons
7000 Mons (BE)**

(72) Inventors:
• **Riche, Nicolas
7000 Mons (BE)**
• **Leroy, Julien
7000 Mons (BE)**
• **Mancas, Matei
59264 Onnaing (FR)**

(74) Representative: **Pronovem
Office Van Malderen
Avenue Josse Goffin 158
1082 Bruxelles (BE)**

(56) References cited:
• WANG, R.; GAO, C.; CHEN, J.; WAN, W.: "Saliency Map in 3D Point Cloud and Its Simplification Application", JOURNAL OF COMPUTATIONAL INFORMATION SYSTEMS, vol. 10, no. 8, 2014, pages 3553-3560, XP002743902,

• OYTUN AKMAN ET AL: "Computing Saliency Map from Spatial Information in Point Cloud Data", 13 December 2010 (2010-12-13), ADVANCED CONCEPTS FOR INTELLIGENT VISION SYSTEMS, SPRINGER BERLIN HEIDELBERG, BERLIN, HEIDELBERG, PAGE(S) 290 - 299, XP019159131, ISBN: 978-3-642-17687-6 * abstract * * page 296 *

• J. LEROY; N. RICHE; M. MANCAS; B. GOSSELIN; T. DUTOIT: "SuperRare: an Object-oriented Saliency Algorithm Based on Superpixels Rarity", IEEE INTERNATIONAL CONFERENCE ON ROBOTICS AND AUTOMATION, 7 June 2014 (2014-06-07), pages 2027-2032, XP002743903,

• "Voxel Cloud Connectivity Segmentation - Supervoxels for Point Clouds" In: J. PAPON; A. ABRAMOV; M. SCHOELER; F. WORGOTTER: "IEEE Conference on Computer Vision and Pattern Recognition", June 2013 (2013-06), XP002743904, pages 2027-2034, * abstract *

• LEE C H ET AL: "Mesh saliency", ACM TRANSACTIONS ON GRAPHICS (TOG), ACM, US, vol. 24, 1 January 2005 (2005-01-01), pages 659-666, XP002624296, ISSN: 0730-0301, DOI: 10.1145/1073204.1073244

• LUCAS PALETTA ET AL: "3D attention: Measurement of Visual Saliency Using Eye Tracking Glasses", 20130427; 20130427 - 20130502, 27 April 2013 (2013-04-27), pages 199-204, XP058015816, DOI: 10.1145/2468356.2468393 ISBN: 978-1-4503-1952-2

• Ali Borji ET AL: "Salient Object Detection: A Survey", , 18 November 2014 (2014-11-18), XP055210828, Retrieved from the Internet: URL:http://arxiv.org/abs/1411.5878 [retrieved on 2015-09-02]

Remarks:

If details are not fully discernible, that is due to the quality of the drawings filed by the applicant.

Remarks:

If details are not fully discernible, that is due to the quality of the drawings filed by the applicant.

## Description

### Field of the Invention

The present invention is related to a method for evaluating a 3D saliency map from any 3D scene representation (using meshes, point clouds, voxels...)

### Background

Visual saliency is a computational process that seeks to identify the most attention-drawing regions from a visual point of view. Most methods of salience are based on characteristics such as colour, texture and more recently tried to introduce the depth information, which is known to be an important signal of saliency in the human cognitive system.

Visual saliency is an important part of the human attention mechanism. Modelling attention computationally is a topic widely studied as affecting many areas such as object detection, segmentation and scene analysis, image compression, robotics, etc. The aim of saliency algorithms is to automatically predict human attention and to select a subset of all the perceived stimuli. Bottom-up attention uses signal-based features to find the most salient objects. Top down attention uses a priori knowledge about the scene or task-oriented knowledge to modify the bottom-up saliency.

In the robotics field, there is a great interest in detecting, recognizing and tracking objects from real-life environment. In this context, the ability to rapidly find salient objects is of a high importance as object detection is the first step of the analysis pipeline which lets the robot discover its environment and take a decision concerning the next action to perform. The literature has been prolific in the field of visual attention on 2D images. Recently, some models which integrate depth information into saliency have emerged such as those proposed by [1], [2], [3], [4]. These attempts to bring depth into saliency models are in fact only extensions of existing 2D models and they are not specifically build to process 3D data. One can find some models that address the saliency of meshes as in [5], [6] or salience on point cloud as [7], [8] but they exploit only the geometric information of 3D data. As more and more data from RGBD (Red Green Blue Depth) sensors is available (like the Microsoft Kinect™ sensor), it becomes possible to work on both the geometric and colour information.

Prior art models of visual attention can be split between two main categories based on their purpose. The first category of models aims to predict the human eye gaze distribution. The second category focuses on finding interesting objects.

Prior art models are mainly based on 2D images. Some of them are extended to use depth feature maps (called further in this paper 2.5D models). Those models are the ones also used to asses our method in the example section. Indeed, if some models process 3D data, they are only based on geometrical features and without an available validation. Making a comparison impossible with our model.

In FT model [10], Achanta proposes to compute the Euclidean distance between the pixel vector in a Gaussian filtered image with the average vector for the input image in the CIE Lab color space. Pixels with higher distances show higher saliency.

Rahtu's model [11] introduces a new salient object segmentation method, which is based on combining a saliency measure with a conditional random field (CRF) model. The proposed saliency measure is formulated using a statistical framework and local feature contrast in illumination, color, and motion information.

Vikram's model [12] proposes a novel approach to compute an image saliency map based on computing local saliencies over random rectangular regions of interest.

In LowMid model [13], the authors detect salient objects within a Bayesian framework by exploiting low and mid-level cues.

A new saliency detection model based on the human visual sensitivity and the amplitude spectrum of Quaternion Fourier Transform (QFT) is introduced in [14]. HVSAS model use the amplitude spectrum of QFT to represent the color, intensity and orientation distributions for image patches. The saliency value for each image patch is calculated by the differences between the QFT amplitude spectrum and the human visual sensitivity.

In BM model [15], the authors propose a new computational saliency detection model which is implemented with a coarse to fine strategy under the Bayesian framework.

In 2011, Fang et al. [16] propose a saliency model in the compressed domain for adaptive image retargeting.

Margolin's model [17] proposes an approach for saliency detection that combines patch distinctness with an object probability map.

A novel saliency detection model WT is introduced in [18] by utilizing lowlevel features obtained from the wavelet transform domain.

In SuperRare [19], the proposed method applies an object oriented saliency mechanism based on multiscale superpixels rarity for stabilizing the detection performance depending of the object's size.

In [20], the authors aim at an extension of the visual attention model with the integration of depth in the computational model built around conspicuity and saliency maps. This model is an extension of centre surround 2D saliency with depth proposed by [21].

In [1], the method constructs 3D layout and shape features from depth measurement that they integrate with image based saliency. This method is an extension of centre surround 2D saliency with depth proposed by [22]

## Aims of the invention

An aim of the present invention is to propose a new saliency model capable of processing as well classical or large clouds of coloured points while offering performance at least equivalent to state of the art models of salient object detection.

Other advantages of the invention will appear clearly from the following detailed description.

## Summary of the Invention

The present invention is related to a method for estimating a 3D saliency map from a scene comprising the steps of:

a. providing 3D point cloud representation of the scene, each point being characterized by at least one perceptual property;

b. segmenting said point cloud representation into supervoxel of comparable size and perceptual property;

c. determining the rarity level of each supervoxel by comparing the perceptual properties of each supervoxel to other values of said supervoxels perceptual property in the entire scene and/or by computing the local contrast of the perceptual property of a supervoxel with said perceptual property of the neighbouring supervoxels,

the rarity level associated to each supervoxel forming the saliency map.

Advantageously, the at least one perceptual property is a static feature selected from the group consisting of colour, texture, surface orientation, curvature, compactness, shape, depth, temperature and pressure, or a dynamic feature selected from the group consisting of motion direction, motion speed, and frequency (flickering).

Preferably the 3D point cloud representation is obtained by merging at least two 2D images both comprising depth information.

Preferably, more than one segmentation step is performed with different supervoxel sizes, the most salient supervoxels of each levels being used for constructing the final 3D saliency map.

Advantageously, the 3D saliency map is independent of the viewpoint.

Preferably, the 3D point cloud is obtained by the conversion of another 3D representation, preferably selected from the group consisting of mesh representation and voxel representation.

Advantageously, the rarity level is obtained from more than one perceptual property, partial rarity maps level being determined for each perceptual property, and the rarity map being obtained by fusion of the partial rarity maps. Preferably, the step of fusing the partial rarities comprises a step of determining weight values for each rarity map, said weight being optimized in order to improve the rarity contrast in the rarity map.

Another aspect of the invention is related to a method for estimating a 2D saliency map comprising the steps of:

a. providing a 3D saliency map by applying the method according to the invention;

b. providing the position and orientation of a viewpoint;

c. projecting the 3D saliency map onto said viewpoint thereby determining the 2D saliency map.

Preferably, the 2D saliency map comprises depth information.

Preferably, an adapted bias filter is applied to the 2D saliency map such as a centred Gaussian filter distribution.

Another aspect of the invention is related to a method for determining the most salient viewpoint of a 3D scene comprising the step of:

a. providing a 3D saliency map by applying the method of the invention;

b. providing a set of possible viewpoint;

c. determining the 2D saliency map corresponding to each viewpoint by the method for estimating a 2D saliency map of the invention;

the most salient viewpoint being the one exhibiting the highest rarity levels (most salient objects).

Another aspect of the invention is related to the use of the method of of the invention for the compression of 3D representation, the most salient volumes being sampled at higher frequencies than volumes with lower saliency.

The method of the invention may also advantageously be used for the optimization of 3D packaging and the creation of smart shelving according to the most salient locations, to optimize exhibition stands or booths.

The invention is also related to the use of 3D saliency maps obtained by the method of the invention combined with an eye tracking device to analyse the visual attention mechanism of a person.

**Figures**

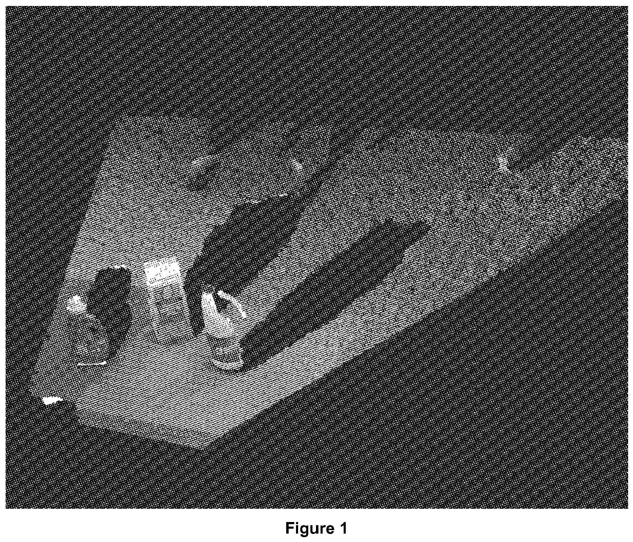

Fig. 1 represents a 2D representation of a point cloud obtained from a RGBD sensor (kinect™). Notice that this representation is a reconstruction obtained from a viewpoint different from the sensor position, inducing view of shadows area behind the objects.

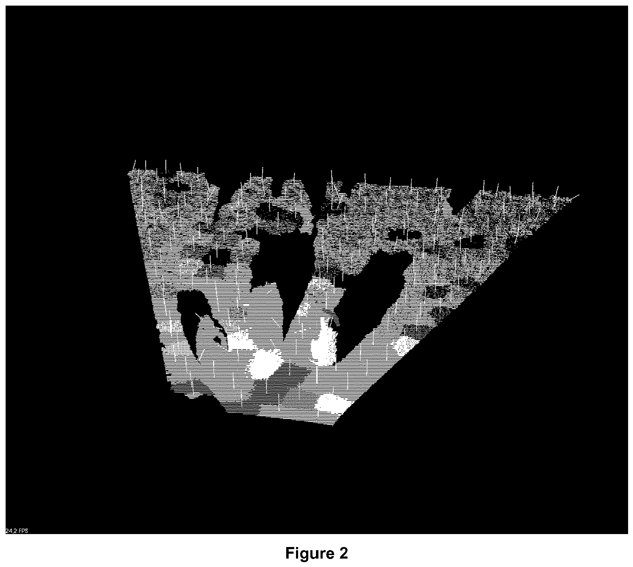

Fig. 2 represents a supervoxel 2D view of the supervoxel segmented representation of the point cloud of fig. 1. Each supervoxel is represented with its normal centered on the center of the supervoxel surface.

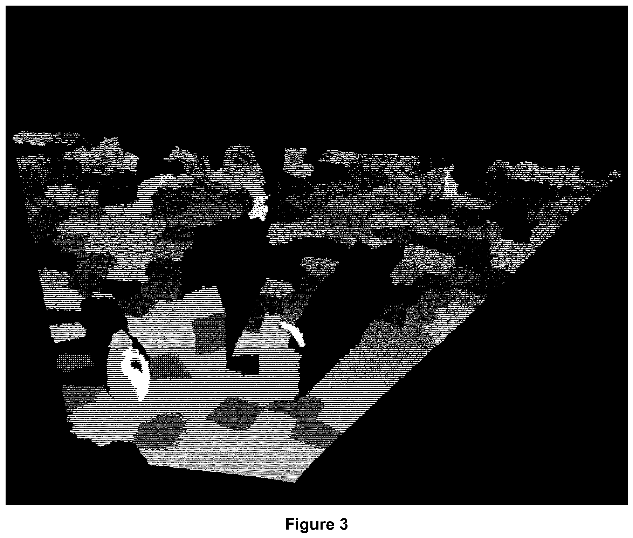

Fig. 3 represents a 2D saliency map obtained from the cloud point of fig. 1 by the method of the invention, by evaluating 3D color saliency.

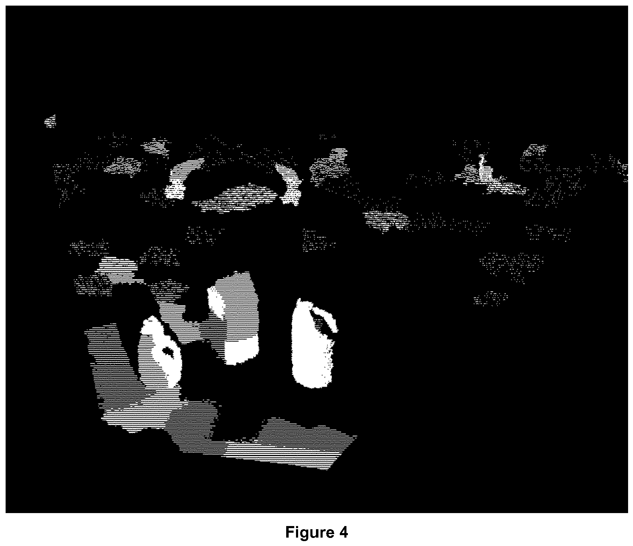

Fig. 4 represents a 2D saliency map obtained from the cloud point of fig. 1 by the method of the invention, by evaluating 3D curvature saliency.

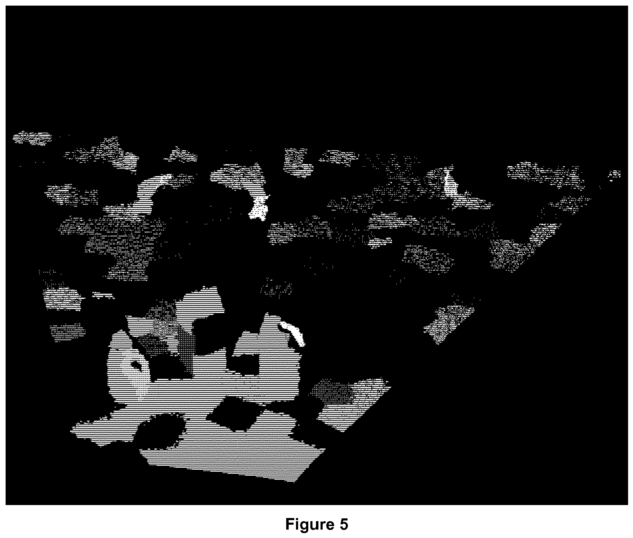

Fig. 5 represents a 2D saliency map obtained from the cloud point of fig. 1 by the method of the invention, by evaluating 3D saliency of the orientation of the supervoxels surface.

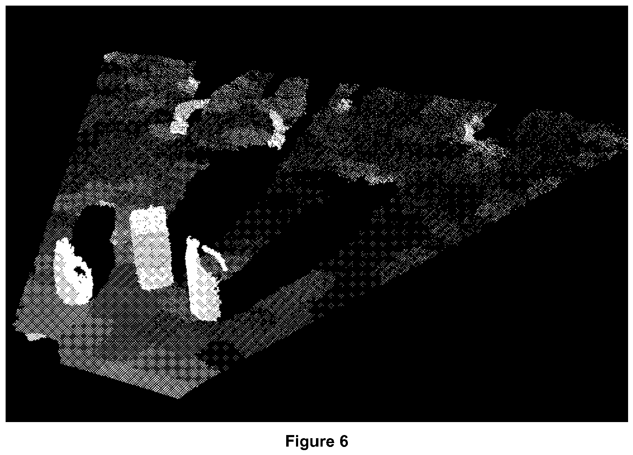

Fig. 6 represents a 2D saliency map obtained by fusion of the saliency maps of fig. 3 to 5.

Figure 7 represents schematically the procedure used for the validation of the method of the invention, the image, depth, point cloud and segmentation mask from the database [1] was used to compare the performance of the method of the invention with prior art 2D and 2.5D saliency mechanism. The comparison are done using a weighted F-measure.

Figure 8 represents the comparison of the model of the invention with state-of-the art 2D saliency models.

Figure 9 represents the comparison of the model of the invention with state-of-the art 2.5D (2D+ depth) saliency models from the database [1].

**Figure keys**

100: 2D images
101: 2D + depth images
102: point clouds
103: 2D saliency method
104: 2.5D Saliency method
105: Method of the invention
106: gound truth
107-108: Comparison using weighted F-measure

**Detailed Description of the Invention**

The present invention is related to a full 3D mechanism of computational attention for extracting salient information directly from a 3D point cloud (or 3D voxel representation) which can be based either on a single RGBD view or the fusion of multiple viewpoints, and more generally on any 3D scene representation converted to a point cloud. The model can easily be extended to other perceptual property than colour, such as surface orientation, texture, curvature, compacity... The disclosed method reduces the point cloud complexity through over-segmentation in order not to process all voxel information, but only supervoxels, which are larger colour-consistent 3D structures. A very interesting feature of the algorithm of the invention is that it provides a bottom-up saliency map which is view-point independent.

This bottom-up saliency map can then be specialized by using top-down information for a given viewpoint by adding a centred Gaussian and the viewpoint-dependent depth information. The present invention was tested on a complex database of 80 colour depth and picture pairs with associated pixel level ground truth segmentation masks. The use of 3D Point Clouds highly improves the results compared to depth maps extended models. While only the colour feature is used in the model of the example, the results are at least equivalent to the best state-of-the-art models.

The model of the invention exploits the 3D aspect of the data which can be made of large organized (or not) point clouds. To achieve this goal, the method of the invention comprises two main steps. The first step is the decomposition of an input cloud into supervoxels. This approach dramatically reduces the amount of information to process while minimizing the loss of information as input.

Preferably, this decomposition is not limited to a single level of decomposition, but several so as to capture different sized objects in the scene.

In the second step, rarity is estimated to extract salient data as explained in [9] we incorporate herewith by reference.

Advantageously, rareness is an efficient way to extract salient data and it works independently from any spatial structure of the data. The use of supervoxels and the rarity-based approach make the present method able to operate on multiple data sources, organized or not, which opens the way to work on the merged data from several sensors, which is currently, at our best knowledge impossible to achieve with existing models.

SUPERRARE 3D: SUPERVOXEL 3D SALIENCY

The present invention discloses an object-oriented algorithm of bottom-up attention dedicated to analyse coloured point cloud. This model builds on the one proposed in [19] we incorporate herewith by reference. One contribution is the use of a rarity-based approach not based on superpixels as in [19] but on supervoxels. Supervoxels consist of an over-segmentation of a point cloud in regions with comparable sizes and characteristics (in terms of colour and other 3D features). More details on supervoxels and the method used here are provided in the next sections. The method of the invention has three major interests:

1) The use of supervoxels reduces the amount of data to be process and allow to work on organized or unorganized clouds. Thus, it can analyse point clouds coming from various sensors or even the fused result of multiple sensors.
2) The use of supervoxels allows to have an object-oriented approach in the 3D space.
3) Supervoxels multi-level decomposition allows to maintain detection performance regardless of the size of the salient objects present in the image.
4) The method of the invention provides a bottom-up 3D saliency map which is viewer-independent. It is then possible to add viewer-dependent top-down information as a viewer dependent centred Gaussian and depth information.

In the example only centred Gaussian viewpoint were used so that the results were comparable to existing 2D or 2.5D model. It should be noticed that even if state of the art 2D models sometimes give equivalent results, they are not able to give view point independent saliency map, which is a major advantage of the present model.

In the following example only the colour feature of the point cloud is taken into account for the sake of comparison with other bidimensional models (including 2D+depth models). Other features like supervoxel orientation or other specific 3D features can be used with the same algorithm.

This comparison will really show what the 3D approach brings to the model. As the colour feature is the only one used in the example (for the sake of comparison with pure 2D models), this approach is subject to the influence of the choice of the colour representation. To provide a first solution to this influence, the saliency maps computed on several colour spaces were fused. The algorithm of the example can be divided into three major stages: (1) supervoxels decomposition, (2) supervoxel rarity-based saliency mechanism, (3) fusion. We present in the following sub-sections the three main steps of the algorithm of the example.

Super Voxels- Cloud Segmentation

The superpixels are the results of over-segmentation of an image into regions of pixels having similar perceptual properties. This is a step commonly used as a pre-processing stage to reduce the amount of information to be processed while still minimizing the loss of information. Recently, methods have emerged attempting to integrate the depth in generating superpixels. Depth-Adaptive superpixels (DASP) [24] extends the notion of superpixels by using a depth map without fully integrate the concept of 3D. Even though this kind of method takes advantage of RGBD data, it is still only an extension towards 3D (usually called 2.5D method).

The methods presented in the literature on supervoxels as [25] or [26] are extension of 2D method to 3D volumes, where video frame are accumulated and treated as a 3D volume where time represents the depth. These methods cannot segment real volumes in space and use their geometry for segmentation purpose. In the present case, a saliency mechanism that could be applied on a large point cloud and use full 3D information is disclosed.

For this the Voxel Cloud Connectivity Segmentation method (VCCS) [27] was used. In that method, supervoxels are extracted from an organized or unorganized point cloud. This ability to generate supervoxels based on the geometric and colour information is used to process large clouds coming for example from merging multiple RGBD sensors.

The use of these kind of point clouds was impossible with the other models at our best knowledge. The first step of the method of the invention is to reduce the large quantity of information provided by a point cloud to a smaller vector of information using a supervoxel segmentation method.

The supervoxels can replace the structure of the voxel-based original point cloud by a set of atomic regions that capture the local redundancy of information. They provide a convenient way to summarize the point cloud and thus greatly reduce the complexity of the subsequent analysis process.

When there is a major difference between the size of supervoxels and the size of the salient object to be detected, this one can by merged with a nearby supervoxel and its information is lost. In this case, the rarity mechanism can advantageously be applied to different levels of supervoxels decomposition so that at some level of detail the salient object is well captured. In this case, the pathway of the algorithm can advantageously be split between the different levels of supervoxels decomposition.

This separation is made to try to capture all the information of salients objects by adjusting the size of supervoxels. Indeed, if a supervoxels is set too large, it may not stick properly to an object and it is seen disappearing into an adjacent supervoxel. To remedy this, the algorithm can work on several levels in parallel that will then be merged into a final saliency map, to maintain both the information of large objects but also smaller ones, while refining the segmentation of salient regions.

B. Rarity based saliency

The rarity mechanism consists, for each supervoxel vector, to compute the cross-scale occurrence probability of each of the N supervoxel. At each colour component i, a rarity value is obtained by the normalization of the sum of the occurrence probabilities of the supervoxel as shown in Eq.(1) where Pi is the occurrence probability of each supervoxel $Sv_i$ value in respect with the empirical probability distribution represented by the histogram within the $i^{th}$ color channel.

$$Rarity(Sv_i) = -\log(\frac{P_i}{N}) \qquad (1)$$

Then, the self-information is used to represent the attention score for the supervoxel region. This mechanism provides higher scores for rare regions. The rarity value falls between 0 (all the supervoxels are the same) and 1 (one supervoxels different from all the others).

1) Intra and inter-supervoxels level fusion

The rarity maps obtained from the rarity mechanism on each color channel (in this case, we select 6 color space representations: HSV, HLS, YUV, RGB, Lab, Luv) are first intra-colour combined. In the example, a 2 levels decomposition using supervoxels seed of 0.05m and 0.02m were empirically selected for balance between accuracy and computation time.

A fusion between same colour rarity maps is achieved at each decomposition level by using the fusion method proposed in Itti et al. [30] which is incorporated herewith by reference. The idea is to provide a higher weight to the map which has important peaks compared to its mean (Eq. 2).

$$S = \sum_{i=1}^{N} EC_i * map_i \qquad (2)$$

where $EC_i$ is the efficiency coefficient for each channel and is computed as in Eq. 3.

$$EC_i = (max_i - mean_i)^2 \qquad (3)$$

These coefficients permit to sort the different maps ($map_i$) based on each map efficiency coefficient $EC_i$. Each map is then multiplied by a fixed weight defined as i = 1...K where K is the number of maps to mix (here K = 3) and i the rank of the sorted maps as shown in the first line of Eq.4. T is a empirical threshold defined in [9].

$$\forall i \in [1, K]\{ \begin{matrix} saliency_i = 0 \, if \, \frac{EC_i}{EC_K} < T \\ saliency_i = \frac{i}{K} * map_i \, if \, \frac{EC_i}{EC_K} \geq T \end{matrix} \qquad (4)$$

At the end of this first fusion process, the model provides one saliency map per colour space representation. The second fusion step, an inter-colour feature fusion between each map coming from the different colour space representation, is achieved using the same method as the one explained for the inter-decomposition level fusion (Eq. 2).

### C. Color Space influence

The method of the example estimates saliency using the rarity only on colour feature. The accuracy of this feature is very important and the method is strongly influenced by the choice of the colour space representation. If saliency maps for the different colour mode are observed independently, one can see that the performance is highly dependent on the mode, ranging from excellent to poor, but in all cases at least one map provides good performance. For this reason we have chosen to apply the rarity on several colour spaces and merge the different rarity maps.

### D. Final Saliency Map

Finally, in the example, an organized point cloud was used, and a Gaussian centred filter was applied to produce a 2D representation from a predetermined viewpoint to represent the central preference that people exhibit in images [23]. In the case of object avoidance, this centred human preference makes also sense in the context of robotics as one wants to correct the path of a robot to avoid collisions with objects in front of it.

### **Example**

### A. Database

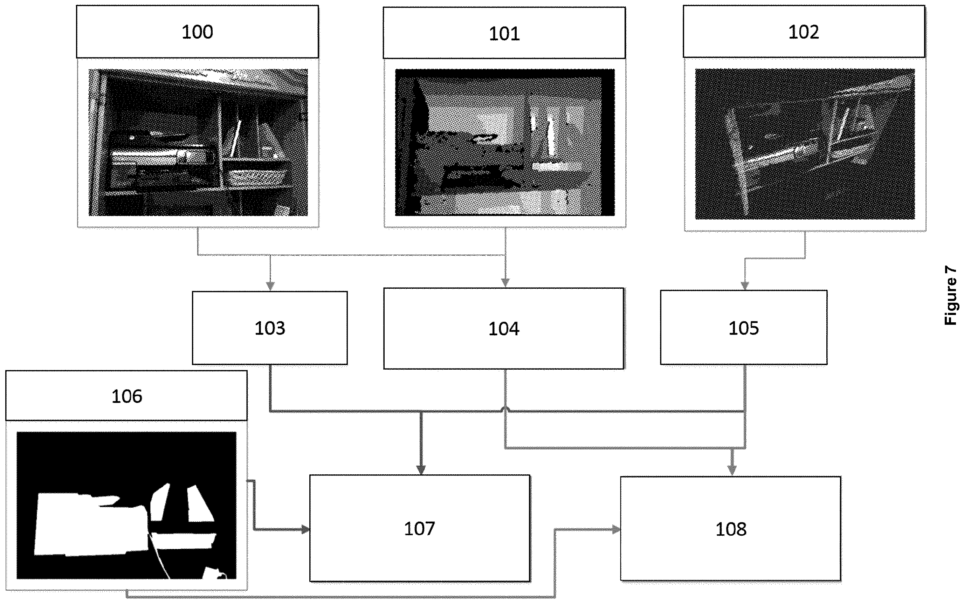

The database that was used to validate our method was published by [1] which is incorporated herewith by reference. It has 80 shots obtained using a Microsoft Kinect™ sensor mounted on a Willow Garage PR2 robot.
The database consists of RGB images, depthmaps and point clouds associated with pixel level ground truth segmentation masks. The segmentation masks are object-oriented for robotic applications, see Figure 7. The 80 scenes are very complex both in terms of number and shape of objects, colours, illumination but also in terms of depth differences. Indeed, there are a lot of planes and objects which have little depth difference with those objects.

### B. Metric

Several measures like the Area-Under-the-Curve measure or the Precision-Recall, have been suggested to evaluate the accuracy of salient object detection maps. However, as shown in [31], these most commonly-used measures do not always provide a reliable evaluation. The authors start by identifying three causes of inaccurate evaluation:

    1) interpolation flaw
    2) dependency flaw and
    3) equal-importance flaw.

By amending these three assumptions, they propose a new reliable measure called $F_{\beta}^{\omega}$ - *measure* and defined in Eq. 5.

$$F_{\beta}^{w} = (1 - \beta^2) \frac{Precision^w * Recall^w}{\beta^2 * Precision^w + Recall^w} \qquad (5)$$

With

$$Precision^w = \frac{TP^W}{TP^w + FP^w}$$

$$Recall^w = \frac{TP^W}{TP^w + FN^w}$$

The weight w has been chosen to resolve the flaws. This metric provides better evaluation than previous measures. This method was used to validate the method of the invention on the database published in [1] in order to be as fair and precise as possible.

C. Method

The validation of the method of the invention was performed in three steps.

First, a 2D saliency map was computed as a view of the 3D saliency map (2D projection). This 2D saliency map is comparable with any other 2D saliency map.

Second, the results of the method of the invention were compared with the state-of-the-art 2D object oriented saliency models, including the so called superare model (2D).

Third, the results of the method according to the invention were compared to 5 other depth-extended (2.5D) models. A schema of this validation method is shown in Figure 7. The Weighted $F_{measure}$ is used to compare the results of the invention with 2D and 2.5D saliency methods given a pre-segmented ground truth.

D. Qualitative Results

These figures shows two crucial advantages of the proposed model over any existing 2D or 2.5D saliency model: (1) the ability to work on any kind of structured or unstructured point cloud and (2) the ability to provide viewpoint-free 3D saliency maps which might be adapted to any given viewpoint using viewpoint-related depth information.

E. Quantitative Results

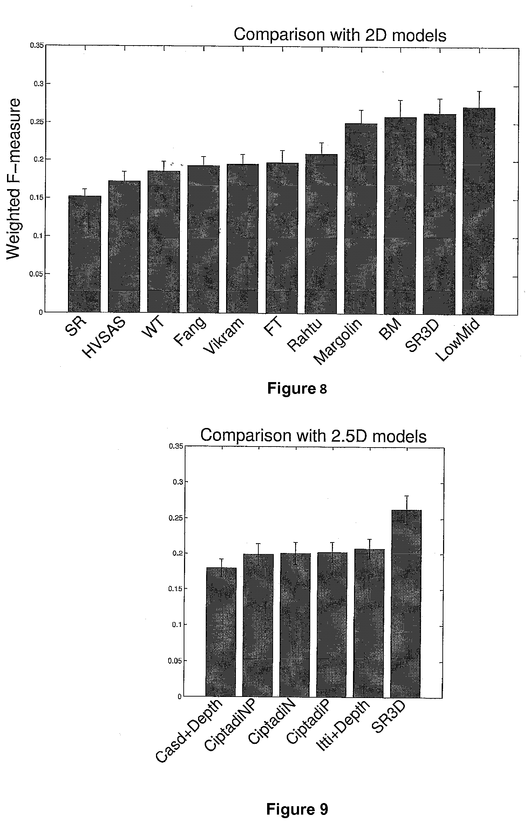

Figure 8 and 9 shows the results of the validation. Concerning the comparison with the 2.5D models, the method of the invention clearly outperforms all the other models (right graph). A comparison between the 2D model and the full-3D model of the invention (SR3D) also shows a clear superiority of the 3D information (left graph).

This fact shows that while a depth-based extension of 2D models sometimes works less well than the initial 2d model on difficult 3D scenes like those from this database, the use of real 3D information from point clouds clearly brings a lot of new information. The method of the invention outperforms the closest prior art method (SR or SuperRare) by nearly 40%.

The Figure 8 shows that the method of the invention is equivalent to the top state-of-the-art 2D object oriented models. It is ranked second with no statistical difference with the first one. Indeed, a Kruskal-Wallis one-way analysis of variance reveals that LowMid's score are not significantly different than the method of the invention($p = 0.94$ for the null hypothesis that the data comes from the same distribution). This results is promising because, compared to the LowMid model, the model of the invention (SR3D) is much faster from a computational point of view even if it takes into account 3D data, only uses the colour feature while LowMid uses a much larger set of features and is able to make a 3D bottom-up saliency maps which can be than adapted to several view-points using viewpoint-related depth information.

**Bibliography**

[1] A. Ciptadi, T. Hermans, and J. Rehg, "An In Depth View of Saliency," Procedings of the British Machine Vision Conference 2013, pp. 112.1- 112.11, 2013.

[2] K. Desingh, M. K. K, D. Rajan, and C. Jawahar, "Depth really Matters: Improving Visual Salient Region Detection with Depth," Procedings of the British Machine Vision Conference 2013, pp. 98.1-98.11, 2013.

[3] Lang, C., Nguyen, T. V., Katti, H., Yadati, K., Kankanhalli, M., & Yan, S. (2012). "Depth matters: Influence of depth cues on visual saliency". In Computer Vision-ECCV 2012 (pp. 101-115). Springer Berlin Heidelberg.

[4] N. Riche, M. Mancas, B. Gosselin, and T. Dutoit, "3D Saliency for abnormal motion selection: The role of the depth map," Computer Vision Systems, 2011.

[5] C. H. Lee, A. Varshney, and D. W. Jacobs, "Mesh saliency," ACM Transactions on Graphics, vol. 24, no. 3, p. 659, July 2005.

[6] Liu, Y. S., Liu, M., Kihara, D., & Ramani, K. (2007, June). "Salient critical points for meshes". In Proceedings of the 2007 ACM symposium on Solid and physical modeling (pp. 277-282). ACM.

[7] WANG, R., GAO, C., CHEN, J., & WAN, W. (2014). "Saliency Map in 3D Point Cloud and Its Simplification Application". Journal of Computational Information Systems, 10(8), pp. 3553-3560.

[8] E. Shtrom, G. Leifman, and A. Tal, "Saliency Detection in Large Point Sets," 2013 IEEE International Conference on Computer Vision, pp. 3591-3598, Dec. 2013.

[9] N. Riche, M. Mancas, M. Duvinage, M. Mibulumukini, B. Gosselin, and T. Dutoit, "Rare2012: A multi-scale rarity-based saliency detection with its comparative statistical analysis," Sig. Proc.: Image Comm., vol. 28, no. 6, pp. 642-658, 2013.

[10] R. Achanta, S. Hemami, F. Estrada, and S. Susstrunk, "Frequency-tuned salient region detection," in Computer Vision and Pattern Recognition, 2009. CVPR 2009. IEEE Conference on. IEEE, 2009, pp. 1597-1604.

[11] E. Rahtu, J. Kannala, M. Salo, and J. Heikkil¨a, "Segmenting salient objects from images and videos," in Computer Vision-ECCV 2010. Springer, 2010, pp. 366-379.

[12] T. N. Vikram, M. Tscherepanow, and B. Wrede, "A saliency map based on sampling an image into random rectangular regions of interest," Pattern Recognition, vol. 45, no. 9, pp. 3114-3124, 2012.

[13] Y. Xie, H. Lu, and M.-H. Yang, "Bayesian saliency via low and mid-level cues," Image Processing, IEEE Transactions on, vol. 22, no. 5, pp. 1689-1698, 2013.

[14] Y. Fang, W. Lin, B.-S. Lee, C.-T. Lau, Z. Chen, and C.-W. Lin, "Bottom-up saliency detection model based on human visual sensitivity and amplitude spectrum," Multimedia, IEEE Transactions on, vol. 14, no. 1, pp. 187-198, 2012.

[15] Y. Xie and H. Lu, "Visual saliency detection based on bayesian model," in Image Processing (ICIP), 201118th IEEE International Conference on. IEEE, 2011, pp. 645-648.

[16] Y. Fang, Z. Chen, W. Lin, and C.-W. Lin, "Saliency detection in the compressed domain for adaptive image retargeting," Image Processing, IEEE Transactions on, vol. 21, no. 9, pp. 3888-3901, 2012.

[17] R. Margolin, L. Zelnik-Manor, and A. Tal, "Saliency for image manipulation," The Visual Computer, vol. 29, no. 5, pp. 381-392, 2013.

[18] N. Imamoglu, W. Lin, and Y. Fang, "A saliency detection model using low-level features based on wavelet transform," Multimedia, IEEE Transactions on, vol. 15, no. 1, pp. 96-105, 2013.

[19] J. Leroy, N. Riche, M. Mancas, B. Gosselin, and T. Dutoit, "Superrare: an object-oriented saliency algorithm based on superpixels rarity," 2013.

[20] N. Ouerhani and H. Hugli, "Computing visual attention from scene depth," in Pattern Recognition, 2000. Proceedings. 15th International Conference on, vol. 1, 2000, pp. 375-378 vol.1.

[21] Itti, Laurent, Christof Koch, and Ernst Niebur. "A model of saliency-based visual attention for rapid scene analysis." IEEE Transactions on pattern analysis and machine intelligence 20.11 (1998): 1254-1259.

[22] Goferman, Stas, Lihi Zelnik-Manor, and Ayellet Tal. "Context-aware saliency detection." Pattern Analysis and Machine Intelligence, IEEE Transactions on 34.10 (2012): 1915-1926.

[23] T. Judd, F. Durand, and A. Torralba, "A benchmark of computational models of saliency to predict human fixations," 2012.

[24] D. Weikersdorfer, D. Gossow, and M. Beetz, "Depth-adaptive superpixels," in Pattern Recognition (ICPR), 2012 21st International Conference on, Nov 2012, pp. 2087-2090.

[25] R. Achanta, A. Shaji, K. Smith, A. Lucchi, P. Fua, and S. Susstrunk, "Slic superpixels compared to state-of-the-art superpixel methods," Pattern Analysis and Machine Intelligence, IEEE Transactions on, vol. 34, no. 11, pp.

2274-2282, Nov 2012.

[26] M. V. D. Bergh, G. Roig, X. Boix, S. Manen, and L. V. Gool, "Online Video SEEDS for Temporal Window Objectness," 2013 IEEE International Conference on Computer Vision, pp. 377-384, Dec. 2013.

[27] J. Papon, A. Abramov, M. Schoeler, and F. Worgotter, "Voxel Cloud Connectivity Segmentation - Supervoxels for Point Clouds," 2013 IEEE Conference on Computer Vision and Pattern Recognition, pp. 2027-2034, June 2013.

[28] K. Lai, L. Bo, X. Ren, and D. Fox, "A large-scale hierarchical multiview RGB-D object dataset," 2011 IEEE International Conference on Robotics and Automation, pp. 1817-1824, May 2011.

[30] L. Itti and C. Koch, "A comparison of feature combination strategies for saliency-based visual attention systems," Journal of Electronic Imaging, vol. 10, pp. 161-169, 1999.

[31] R. Margolin, L. Zelnik-Manor, and A. Tal, "How to evaluate foreground maps?" IEEE Conference on Computer Vision and Pattern Recognition, 2014.

## Claims

1. Method for estimating a 3D saliency map from a scene comprising the steps of:

    a. providing 3D point cloud representation of the scene, each point being **characterized by** at least one perceptual property;
    b. segmenting said point cloud representation into supervoxel of comparable size and perceptual property;
    c. determining the rarity level of each supervoxel by comparing the perceptual properties of each supervoxel to other values of said supervoxels perceptual property in the entire scene and/or by computing the local contrast of the perceptual property of a supervoxel with said perceptual property of the neighbouring supervoxels,

    the rarity level associated to each supervoxel forming the saliency map.

2. Method according to claim 1 wherein the at least one perceptual property is a static feature selected from the group consisting of colour, texture, surface orientation, curvature, compactness, shape, depth, temperature and pressure, or a dynamic feature selected from the group consisting of motion direction, motion speed, and frequency (flickering).

3. Method according to any of the previous claims wherein the 3D point cloud representation is obtained by merging at least two 2D images comprising depth information.

4. Method according to any of the previous claims wherein more than one segmentation step is performed with different supervoxel sizes, the most salient supervoxels of each levels being used for constructing the final 3D saliency map.

5. Method according to any of the previous claims wherein the 3D saliency map is independent of the viewpoint.

6. Method according to any of the previous claims wherein the 3D point cloud is obtained by the conversion of another 3D representation, preferably selected from the group consisting of mesh representation and voxel representation.

7. Method according to any of the previous claims wherein the rarity level is obtained from more than one perceptual property, partial rarity maps level being determined for each perceptual property, and the rarity map being obtained by fusion of the partial rarity maps.

8. Method according to claim 7 wherein the step of fusing the partial rarities comprise a step of determining weight values for each rarity map, said weight being optimized in order to improve the rarity contrast in the rarity map.

9. Method for estimating a 2D saliency map comprising the steps of:

    a. providing a 3D saliency map by applying the method according to any of the previous claims;
    b. providing the position and orientation of a viewpoint;
    c. projecting the 3D saliency map onto said viewpoint thereby determining the 2D saliency map.

10. Method for estimating a 2D saliency map according to claim 9 wherein the 2D saliency map comprises depth information.

11. Method for determining the most salient viewpoint of a 3D scene comprising the step of:

   a. providing a 3D saliency map by applying the method according to any of claims 1 to 8;
   b. providing a set of possible viewpoint;
   c. determining the 2D saliency map corresponding to each viewpoint by the method of any of the claims 9 to 10;

the most salient viewpoint being the one exhibiting the highest rarity levels (most salient objects).

12. Use of the method of any of the claims 1 to 8 for the compression of 3D representation, the most salient volumes being sampled at higher frequencies than volumes with lower saliency.

13. Use of 3D saliency maps obtained by the method of any of claims 1 to 8 for the optimization of 3D packaging and the creation of smart shelving according to the most salient locations.

14. Use of 3D saliency maps obtained by the method of any of claims 1 to 8 to optimize exhibition stands or booths.

15. Use of 3D saliency maps obtained by the method of any of claims 1 to 8 combined with an eye tracking device to analyse the visual attention mechanism of a person.

**Patentansprüche**

1. Verfahren zum Schätzen einer 3D-Salienzkarte aus einer Szene, umfassend die folgenden Schritte:

   a. Bereitstellen einer 3D-Punktwolkendarstellung der Szene, wobei jeder Punkt durch mindestens eine Wahrnehmungseigenschaft gekennzeichnet ist;
   b. Segmentierung der Punktwolkendarstellung in Supervoxel vergleichbarer Größe und Wahrnehmungseigenschaft;
   c. Bestimmen des Seltenheitsniveaus jedes Supervoxels durch Vergleichen der Wahrnehmungseigenschaften jedes Supervoxels mit anderen Werten der Supervoxel-Wahrnehmungseigenschaft in der gesamten Szene und/oder durch Berechnen des lokalen Kontrasts der Wahrnehmungseigenschaft eines Supervoxels mit der Wahrnehmungseigenschaft der benachbarten Supervoxels,

wobei das Seltenheitsnivau, das mit jedes Supervoxels assoziiert ist, die Salienzkarte bildet.

2. Verfahren nach Anspruch 1, wobei die mindestens eine Wahrnehmungseigenschaft ein statisches Merkmal ist, ausgewählt aus der Gruppe, bestehend aus Farbe, Textur, Oberflächenausrichtung, Krümmung, Kompaktheit, Form, Tiefe, Temperatur und Druck, oder ein dynamisches Merkmal, ausgewählt aus der Gruppe, bestehend aus Bewegungsrichtung, Bewegungsgeschwindigkeit und Frequenz (Flimmern).

3. Verfahren nach einem der vorhergehenden Ansprüche, wobei die 3D-Punktwolkendarstellung durch Zusammenführen von mindestens zwei 2D-Bildern erhalten wird, die Tiefeninformationen umfassen.

4. Verfahren nach einem der vorhergehenden Ansprüche, wobei mehr als ein Segmentierungsschritt mit verschiedenen Supervoxelgrößen durchgeführt wird, wobei die vorspringendsten Supervoxel jedes Niveaus verwendet werden, um die endgültige 3D-Salienzkarte zu erstellen.

5. Verfahren nach einem der vorhergehenden Ansprüche, wobei die 3D-Salienzkarte unabhängig vom Blickpunkt ist

6. Verfahren nach einem der vorhergehenden Ansprüche, wobei die 3D-Punktwolke durch die Umwandlung einer anderen 3D-Darstellung erhalten wird, vorzugsweise ausgewählt aus der Gruppe, bestehend aus einer Netzdarstellung und einer Voxeldarstellung.

7. Verfahren nach einem der vorhergehenden Ansprüche, wobei das Seltenheitsniveau aus mehr als einer Wahrnehmungseigenschaft erhalten wird, wobei das Niveau der teilweisen Seltenheitskartenfür jede Wahrnehmungseigenschaft bestimmt wird und die Seltenheitskarte durch Verschmelzen der teilweisen Seltenheitskarten erhalten wird

8. Verfahren nach Anspruch 7, wobei der Schritt des Verschmelzens der teilweisen Seltenheiten einen Schritt des Bestimmens von Gewichtswerten für jede Seltenheitskarte umfasst, wobei das Gewicht optimiert wird, um den Seltenheitskontrast in der Seltenheitskarte zu verbessern.

9. Verfahren zum Schätzen einer 2D-Salienzkarte, umfassend die folgenden Schritte:

   a. Bereitstellen einer 3D Salienzkarte durch Anwenden des Verfahrens nach einem der vorhergehenden Ansprüche;
   b. Bereitstellen der Position und Ausrichtung eines Blickpunkts;
   c. Projizieren der 3D-Salienzkarte auf den Blickpunkt, wodurch die 2D-Salienzkarte bestimmt wird.

10. Verfahren zum Schätzen einer 2D-Salienzkarte nach Anspruch 9, wobei die 2D-Salienzkarte Tiefeninformationen umfasst.

11. Verfahren zum Bestimmen des vorspringendsten Blickpunkts einer 3D-Szene, umfassend den folgenden Schritt:

   a. Bereitstellen einer 3D-Salienzkarte durch Anwenden des Verfahrens nach einem der Ansprüche 1 bis 8;
   b. Bereitstellen eines Satzes von möglichen Blickpunkten;
   c. Bestimmen der 2D-Salienzkarte, die jedem Blickpunkt entspricht, durch das Verfahren nach einem der Ansprüche 9 bis 10;

   wobei der vorspringendste Blickpunkt derjenige ist, der die höchsten Seltenheitsniveaus (vorspringendsten Objekte) zeigt.

12. Verwendung des Verfahrens nach einem der Ansprüche 1 bis 8 zur Kompression der 3D-Darstellung, wobei die vorspringensten Volumina mit höheren Frequenzen als die Volumina mit niedrigerer Salienz probeentnommen werden.

13. Verwendung von 3D-Salienzkarten, erhalten durch das Verfahren nach einem der Ansprüche 1 bis 8, zur Optimierung der 3D-Verpackung und der Erstellung eines intelligenten Regalsystems gemäß den vorspringendsten Stellen.

14. Verwendung von 3D-Salienzkarten, erhalten durch das Verfahren nach einem der Ansprüche 1 bis 8, um Ausstellungsstände oder Abteilungen zu optimieren.

15. Verwendung von 3D-Salienzkarten, erhalten durch das Verfahren nach einem der Ansprüche 1 bis 8, kombiniert mit einer Eye-Tracking-Vorrichtung, um den visuellen Aufmerksamkeitsmechanismus einer Person zu analysieren.

**Revendications**

1. Procédé pour estimer une carte de saillance 3D à partir d'une scène comprenant les étapes :

   a. de fourniture d'une représentation par un nuage de points 3D de la scène, chaque point étant **caractérisé par** au moins une propriété de perception ;
   b. de segmentation de ladite représentation par un nuage de points en supervoxels de taille et de propriété de perception comparables ;
   c. de détermination du niveau de rareté de chaque supervoxel en comparant les propriétés de perception de chaque supervoxel à d'autres valeurs de ladite propriété de perception des supervoxels dans la scène entière et/ou en calculant le contraste local de la propriété de perception d'un supervoxel avec ladite propriété de perception des supervoxels voisins,

   le niveau de rareté associé à chaque supervoxel formant la carte de saillance.

2. Procédé selon la revendication 1, dans lequel ladite au moins une propriété de perception est une caractéristique statique sélectionnée dans le groupe consistant en une couleur, une texture, une orientation de surface, une courbure, une compacité, une forme, une profondeur, une température et une pression, ou une caractéristique dynamique sélectionnée dans le groupe consistant en une direction de mouvement, une vitesse de mouvement, et une fréquence (scintillation).

3. Procédé selon l'une quelconque des revendications précédentes, dans lequel la représentation par un nuage de points 3D est obtenue en fusionnant au moins deux images 2D comprenant des informations de profondeur.

4. Procédé selon l'une quelconque des revendications précédentes, dans lequel plusieurs étapes de segmentation sont effectuées avec différentes tailles de supervoxel, les supervoxels les plus saillants de chaque niveau étant utilisés pour construire la carte de saillance 3D finale.

5. Procédé selon l'une quelconque des revendications précédentes, dans lequel la carte de saillance 3D est indépendante du point de vue.

6. Procédé selon l'une quelconque des revendications précédentes, dans lequel le nuage de points 3D est obtenu par la conversion d'une autre représentation 3D, de préférence sélectionnée dans le groupe consistant en une représentation maillée et une représentation de voxels.

7. Procédé selon l'une quelconque des revendications précédentes, dans lequel le niveau de rareté est obtenu à partir de plusieurs propriétés de perception, un niveau de cartes de rareté partielles étant déterminé pour chaque propriété de perception, et la carte de rareté étant obtenue par la fusion des cartes de rareté partielles.

8. Procédé selon la revendication 7, dans lequel l'étape de fusion des raretés partielles comprend une étape de détermination de valeurs de coefficient de pondération pour chaque carte de rareté, ledit coefficient de pondération étant optimisé afin d'améliorer le contraste de rareté dans la carte de rareté.

9. Procédé pour estimer une carte de saillance 2D comprenant les étapes :

   a. d'obtention d'une carte de saillance 3D en appliquant le procédé selon l'une quelconque des revendications précédentes ;
   b. de fourniture de la position et de l'orientation d'un point de vue ;
   c. de projection de la carte de saillance 3D sur ledit point de vue, déterminant de ce fait la carte de saillance 2D.

10. Procédé pour estimer une carte de saillance 2D selon la revendication 9, dans lequel la carte de saillance 2D comprend des informations de profondeur.

11. Procédé pour déterminer le point de vue le plus saillant d'une scène 3D comprenant les étapes :

   a. d'obtention d'une carte de saillance 3D en appliquant le procédé selon l'une quelconque des revendications 1 à 8 ;
   b. de fourniture d'un ensemble de points de vue possibles ;
   c. de détermination de la carte de saillance 2D correspondant à chaque point de vue par le procédé selon l'une quelconque des revendications 9 et 10 ;

   le point de vue le plus saillant étant celui présentant les niveaux de rareté les plus élevés (objets les plus saillants).

12. Utilisation du procédé de l'une quelconque des revendications 1 à 8 pour la compression d'une représentation 3D, les volumes les plus saillants étant échantillonnés à des fréquences plus élevées que les volumes avec une saillance plus faible.

13. Utilisation de cartes de saillance 3D obtenues par le procédé de l'une quelconque des revendications 1 à 8 pour l'optimisation d'un emballage 3D et la création d'un rayonnage intelligent un emballage et la création d'un rayonnage intelligent conformément aux emplacements les plus saillants.

14. Utilisation de cartes de saillance 3D obtenues par le procédé de l'une quelconque des revendications 1 à 8 pour optimiser des stands ou des cabines d'exposition.

15. Utilisation de cartes de saillance 3D obtenues par le procédé de l'une quelconque des revendications 1 à 8 combiné avec un dispositif de suivi des yeux pour analyser le mécanisme d'attention visuelle d'une personne.

Figure 1

**Figure 2**

**Figure 3**

Figure 4

**Figure 5**

Figure 6

Figure 7

**Figure 8**

**Figure 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. CIPTADI ; T. HERMANS ; J. REHG.** An In Depth View of Saliency. *Procdings of the British Machine Vision Conference 2013,* 2013, 112.1-112.11
- **K. DESINGH ; M. K. K, D. RAJAN ; C. JAWAHAR.** Depth really Matters: Improving Visual Salient Region Detection with Depth. *Procdings of the British Machine Vision Conference 2013,* 2013, 98.1-98.11
- Depth matters: Influence of depth cues on visual saliency. **LANG, C. ; NGUYEN, T. V. ; KATTI, H. ; YADATI, K. ; KANKANHALLI, M. ; YAN, S.** Computer Vision-ECCV. Springer Berlin Heidelberg, 2012, 101-115
- **N. RICHE ; M. MANCAS ; B. GOSSELIN ; T. DUTOIT.** 3D Saliency for abnormal motion selection: The role of the depth map. *Computer Vision Systems,* 2011
- **C. H. LEE ; A. VARSHNEY ; D. W. JACOBS.** Mesh saliency. *ACM Transactions on Graphics,* July 2005, vol. 24, 659
- Salient critical points for meshes. **LIU, Y. S. ; LIU, M. ; KIHARA, D. ; RAMANI, K.** Proceedings of the 2007 ACM symposium on Solid and physical modeling. ACM, June 2007, 277-282
- **WANG, R. ; GAO, C. ; CHEN, J. ; WAN, W.** Saliency Map in 3D Point Cloud and Its Simplification Application. *Journal of Computational Information Systems,* 2014, vol. 10 (8), 3553-3560
- **E. SHTROM ; G. LEIFMAN ; A. TAL.** Saliency Detection in Large Point Sets. *2013 IEEE International Conference on Computer Vision,* December 2013, 3591-3598
- **N. RICHE ; M. MANCAS ; M. DUVINAGE ; M. MIBULUMUKINI ; B. GOSSELIN ; T. DUTOIT.** Rare2012: A multi-scale rarity-based saliency detection with its comparative statistical analysis. *Sig. Proc.: Image Comm.,* 2013, vol. 28 (6), 642-658
- Frequency-tuned salient region detection. **R. ACHANTA ; S. HEMAMI ; F. ESTRADA ; S. SUSSTRUNK.** Computer Vision and Pattern Recognition, 2009. CVPR 2009. IEEE Conference on. IEEE, 2009, 1597-1604
- Segmenting salient objects from images and videos. **E. RAHTU ; J. KANNALA ; M. SALO ; J. HEIKKIL̈A.** Computer Vision-ECCV 2010. Springer, 2010, 366-379

- **T. N. VIKRAM ; M. TSCHEREPANOW ; B. WREDE.** A saliency map based on sampling an image into random rectangular regions of interest. *Pattern Recognition,* 2012, vol. 45 (9), 3114-3124
- **Y. XIE ; H. LU ; M.-H. YANG.** Bayesian saliency via low and mid-level cues. *Image Processing, IEEE Transactions on,* 2013, vol. 22 (5), 1689-1698
- **Y. FANG ; W. LIN ; B.-S. LEE ; C.-T. LAU ; Z. CHEN ; C.-W. LIN.** Bottom-up saliency detection model based on human visual sensitivity and amplitude spectrum. *Multimedia, IEEE Transactions on,* 2012, vol. 14 (1), 187-198
- Visual saliency detection based on bayesian model. **Y. XIE ; H. LU.** Image Processing (ICIP), 201118th IEEE International Conference on. IEEE, 2011, 645-648
- **Y. FANG ; Z. CHEN ; W. LIN ; C.-W. LIN.** Saliency detection in the compressed domain for adaptive image retargeting. *Image Processing, IEEE Transactions on,* 2012, vol. 21 (9), 3888-3901
- **R. MARGOLIN ; L. ZELNIK-MANOR ; A. TAL.** Saliency for image manipulation. *The Visual Computer,* 2013, vol. 29 (5), 381-392
- **N. IMAMOGLU ; W. LIN ; Y. FANG.** A saliency detection model using low-level features based on wavelet transform. *Multimedia, IEEE Transactions on,* 2013, vol. 15 (1), 96-105
- **J. LEROY ; N. RICHE ; M. MANCAS ; B. GOSSELIN ; T. DUTOIT.** *Superrare: an object-oriented saliency algorithm based on superpixels rarity,* 2013
- **N. OUERHANI ; H. HUGLI.** Computing visual attention from scene depth. *Pattern Recognition, 2000. Proceedings. 15th International Conference on,* 2000, vol. 1, 375-378
- **ITTI ; LAURENT ; CHRISTOF KOCH ; ERNST NIEBUR.** A model of saliency-based visual attention for rapid scene analysis. *IEEE Transactions on pattern analysis and machine intelligence 20.11,* 1998, 1254-1259
- **GOFERMAN ; STAS ; LIHI ZELNIK-MANOR ; AYELLET TAL.** Context-aware saliency detection. *Pattern Analysis and Machine Intelligence, IEEE Transactions on 34.10,* 2012, 1915-1926
- **T. JUDD ; F. DURAND ; A. TORRALBA.** *A benchmark of computational models of saliency to predict human fixations,* 2012

- **D. WEIKERSDORFER ; D. GOSSOW ; M. BEETZ.** Depth-adaptive superpixels. *Pattern Recognition (ICPR), 2012 21st International Conference on,* November 2012, 2087-2090
- **R. ACHANTA ; A. SHAJI ; K. SMITH ; A. LUCCHI ; P. FUA ; S. SUSSTRUNK.** Slic superpixels compared to state-of-the-art superpixel methods. *Pattern Analysis and Machine Intelligence, IEEE Transactions on,* November 2012, vol. 34 (11), 2274-2282
- **M. V. D. BERGH ; G. ROIG ; X. BOIX ; S. MANEN ; L. V. GOOL.** Online Video SEEDS for Temporal Window Objectness. *2013 IEEE International Conference on Computer Vision,* December 2013, 377-384
- **J. PAPON ; A. ABRAMOV ; M. SCHOELER ; F. WORGOTTER.** Voxel Cloud Connectivity Segmentation - Supervoxels for Point Clouds. *2013 IEEE Conference on Computer Vision and Pattern Recognition,* June 2013, 2027-2034
- **K. LAI ; L. BO ; X. REN ; D. FOX.** A large-scale hierarchical multiview RGB-D object dataset. *2011 IEEE International Conference on Robotics and Automation,* May 2011, 1817-1824
- **L. ITTI ; C. KOCH.** A comparison of feature combination strategies for saliency-based visual attention systems. *Journal of Electronic Imaging,* 1999, vol. 10, 161-169
- **R. MARGOLIN ; L. ZELNIK-MANOR ; A. TAL.** How to evaluate foreground maps?. *IEEE Conference on Computer Vision and Pattern Recognition,* 2014